# DEMANDE DE BREVET EUROPEEN

(11) **EP 0 893 646 A1**
(43) Date de publication de la demande: **27.01.1999**
(21) Numéro de dépôt: 98401829.1
(22) Date de dépôt: 20.07.1998
(51) Int. Cl.: F21M 3/05, B60Q 1/00, F21V 8/00

(54) **Module d'éclairage à conduit de lumière pour véhicule automobile**

(30) Priorité: 21.07.1997 FR 9709210
(71) Demandeur: VALEO VISION, 93000 Bobigny (FR)
(72) Inventeur: Buard, Philippe, 94160 Saint-Mande (FR)
(74) Mandataire: Martin, Jean-Jacques

(57) **Abrégé**

L'invention concerne un module d'éclairage (1000) comprenant une source lumineuse qui éclaire l'extrémité d'un conduit de lumière (1100) muni d'une pluralité de facettes de réflexion obliques (1111, 1121) coopérant avec des lentilles (1111a, 1121a).

Selon l'invention, le conduit de lumière comprend une pluralité de lames transparentes juxtaposées (1110, 1120, 1130), et il est prévu une pièce de référence (1200) qui comporte une première partie (1210, 1220) définissant un plan de référence horizontal, et une deuxième partie (1230) définissant un plan de référence vertical, les lames transparentes juxtaposées étant montées en appui contre lesdites première et deuxième parties dans une position déterminée selon l'axe longitudinal dudit conduit de lumière afin que les facettes de réflexion coopèrent avec lesdites lentilles pour qu'elles projettent dans la direction d'éclairement des images correspondant aux facettes.

## Description

La présente invention concerne de manière générale les projecteurs de véhicule automobile.

Elle concerne plus particulièrement un module d'éclairage du type comprenant une source lumineuse réelle, des moyens pour concentrer le rayonnement lumineux issu de cette source sur l'extrémité d'un conduit de lumière muni d'une pluralité de facettes de réflexion obliques coopérant avec une pluralité d'éléments dioptriques homologues d'axe parallèle à la direction d'éclairement.

On connaît déjà du document FR 2 514 105 appartenant à la Demanderesse, un projecteur de ce type dans lequel le conduit de lumière est constitué par un unique barreau transparent disposé à l'horizontal et transversalement à la direction d'éclairement, l'avant du barreau étant constitué par une face verticale de sortie de lumière, et l'arrière du barreau comportant une série de décrochements en hauteur délimitant une série de facettes de réflexion obliques, ces facettes étant disposées en relation de coopération optique avec des lentilles d'axe parallèle à la direction d'éclairement pour que ces lentilles projettent dans cette direction des images correspondant aux facettes.

Un tel projecteur présente cependant comme inconvénient principal le fait que l'on ne peut pas maîtriser la quantité de flux lumineux arrivant sur chacune des facettes dudit barreau optique unique, du fait des réflexions multiples des ruons lumineux à l'intérieur de ce dernier.

En effet, à cause des réflexions multiples incontrôlables des rayons lumineux à l'intérieur dudit barreau, il peut s'avérer qu'une ou plusieurs facettes dudit barreau soit très faiblement éclairée.

Ceci a pour conséquence d'altérer la qualité du faisceau lumineux finalement obtenu.

De plus, dans un tel projecteur, aucun dispositif de montage n'est prévu pour assurer d'une part le bon positionnement des facettes de réflexion obliques et de la face de sortie de lumière du conduit de lumière par rapport aux lentilles de façon à ce que celles-ci projettent dans la direction d'éclairement les images correspondant aux facettes dans une position déterminée, malgré les dispersions de lumière dans l'épaisseur du barreau transparent, et d'autre part un bon positionnement de la face d'entrée du conduit de lumière par rapport à la source lumineuse.

Afin de résoudre les inconvénients précités, la présente invention propose un nouveau module d'éclairage dans lequel la conduction du flux lumineux entre la source lumineuse réelle et chaque facette du conduit de lumière, est individualisée de façon à pouvoir maîtriser l'éclairement desdites facettes et obtenir le faisceau final prévu, et dans lequel il est prévu un système de montage du conduit de lumière assurant un bon positionnement des facettes, et de la face de sortie de lumière de ce dernier vis-à-vis des éléments dioptriques de sorte que ceux-ci projettent dans la direction d'éclairement des images correspondant aux facettes bien positionnées dans le faisceau d'éclairement, ainsi au'un bon positionnement de la face d'entrée du conduit de lumière par rapport à la source lumineuse.

Plus particulièrement, dans le projecteur selon l'invention, le conduit de lumière est constitué par une pluralité de lames transparentes juxtaposées, s'étendant selon l'axe longitudinal dudit conduit de lumière et pourvu chacune, au moins à leur extrémité la plus éloignée de la source lumineuse réelle, d'une facette de réflexion oblique, et il est prévu une pièce de référence pour le montage dudit conduit de lumière, qui comprend une première partie généralement plane horizontale définissant un plan de référence horizontal, et une deuxième partie généralement plane verticale, s'étendant sur l'axe longitudinal dudit conduit de lumière et définissant un plan de référence vertical, lesdites lames transparentes juxtaposées dudit conduit de lumière étant montées en appui contre les premières et deuxième parties planes de ladite pièce de référence, dans une position déterminée selon l'axe longitudinal dudit conduit de lumière, de sorte que leurs facettes de réflexion coopèrent optiquement avec lesdits éléments dioptriques pour que les images des facettes projetées par ceux-ci dans la direction d'éclairement soient positionnées de manière déterminée.

Ainsi, avantageusement selon l'invention, les lames transparentes constituant le conduit de lumière, sont en appui sur deux plans de référence horizontal et vertical matérialisés par les première et deuxième partie planes de la pièce de référence. On s'affranchit alors des problèmes optiques liés aux tolérances de fabrication desdites lames, les facettes de réflexion desdites lames étant positionnées de façon déterminée en référence sur le plan de référence horizontal, et leur face de sortie de lumière étant placée de manière déterminée en référence sur le plan vertical.

Selon un mode de réalisation préféré du module d'éclairage selon l'invention, la première partie plane horizontale de la pièce de référence est une partie supérieure contre laquelle s'appuie au moins une partie de la surface supérieure dudit conduit de lumière et la deuxième partie plane verticale de la pièce de référence est une partie avant ajourée contre laquelle s'appuient les faces avant de sortie de la lumière des lames transparentes du conduit de lumière.

En outre, il est prévu avantageusement selon l'invention une pièce de maintien fixée sur la pièce de référence, en appui contre les faces arrière et inférieure du conduit de lumière pour maintenir par compression lesdites lames transparentes en appui contre la première et la deuxième partie plane de ladite pièce de référence. Selon ce mode de réalisation, il est prévu des éléments souples compressibles entre la face arrière du conduit de lumière et ladite pièce de maintien.

Ainsi selon l'invention, lesdites lames transparentes sont maintenues en compression suivant deux directions transversales à l'axe longitudinal du conduit ce lumière, la direction verticale et la direction horizontale. Il n'y a pas de pièce de maintien supplémentaire suivant la direction de l'axe longitudinal du conduit de lumière, car les forces ce compression et les forces de frottement entre les faces des différentes lames transparentes du conduit de lumière suffisent pour maintenir lesdites lames immobiles dans cette direction.

Selon l'invention, on peut prévoir un élément élastique de pression entre le conduit de lumière et la première partie plane de ladite pièce de référence.

En outre, la pièce de référence peut comporter à une extrémité un cadre pour le montage d'un réflecteur elliptique portant la source lumineuse réelle, de sorte que le deuxième foyer dudit réflecteur elliptique soit situé à l'extrémité de la lame supérieure la plus courte du conduit de lumière, directement en appui contre la première partie plane de la pièce de référence.

Selon une caractéristique particulière du module d'éclairage selon l'invention, la première partie plane horizontale de la pièce de référence comporte une partie plane haute et une partie plane basse horizontales, parallèles et raccordées par un décrochement, la partie plane haute horizontale présentant un bord d'extrémité en biais qui porte une pige pour le positionnement selon l'axe longitudinal du conduit de lumière, de la lame transparente directement en appui contre la partie plane haute horizontale de ladite pièce de référence.

Selon l'invention, pour la réalisation d'un faisceau de coupure, il est prévu des caches disposés sur le trajet de certains faisceaux élémentaires d'au moins certaines facettes de réflexion entre la face avant des lames transparentes considérées et les éléments dioptriques associés, lesdits caches étant solidaires d'une pièce avant de montage fixée sur la pièce de référence dans une position déterminée par rapport à celle-ci, cette pièce avant de montage comprenant des aménagement pour le montage dans cette dernières des éléments dioptriques.

Ainsi, avantageusement selon l'invention, grâce à la pièce avant de montage, on réalise un bon positionnement des éléments dioptriques et des caches par rapport aux faces avant de sortie des lames transparentes. En outre, du fait que les caches et les éléments dioptriques sont solidaires de la même pièce de montage, ils conservent leur position relative malgré des déplacements induits par des phénomènes éventuels de dispersion ou de dilatation. En effet dans ce cas, c'est l'ensemble constitué par les caches et les éléments dioptriques solidaires qui se déplace. La position relative des images des caches ne varie donc pas et la coupure du faisceau reste nette.

Selon un mode de réalisation, il peut être prévu que les caches et la pièce avant de montage forment une seule pièce.

Selon un autre mode de réalisation, les caches peuvent être rapportés sur ladite pièce avant de montage et fixés sur celle-ci par des moyens de fixation.

Selon d'autres caractéristiques du module d'éclairage selon l'invention, lesdites lames transparentes sont réalisées en verre. La pièce de référence, la pièce de maintien et la pièce avant de montage peuvent être réalisées par moulage en aluminium. Les éléments dioptriques sont des lentilles de Fresnel réalisées en Poly-N-méthylméthacrylimide.

Le module d'éclairage selon l'invention, peut être avantageusement fixé à un réflecteur de faisceau de route d'un projecteur selon l'invention, ledit module d'éclairage assurant la fonction code.

L'invention propose également un procédé de réalisation d'un module d'éclairage tel que précité.

Ce procédé est caractérisé en ce que :
a) on positionne ladite pièce de maintien sur une platine de montage portant des piges, placées à des endroits déterminés suivent l'axe longitudinal de ladite platine, pour le positionnement d'au moins certaines lames transparentes selon l'axe longitudinal du conduit de lumière,
b) on place sur ladite pièce de maintien, les lames transparentes dudit conduit de lumière, les unes sur les autres suivant des longueurs décroissantes, au moins certaines lames transparentes étant positionnées de sorte qu'une de leurs facettes de réflexion obliques vienne en butée contre la pige de positionnement correspondante de la platine,
c) On positionne sur la superposition de lames transparentes la pièce de référence de sorte que sa première partie plane horizontale soit placée sur la surface supérieure du conduit de lumière et sa deuxième partie plane verticale soit placée contre les faces avant de sortie de la lumière desdites lames transparentes,
d) on solidarise la pièce de maintien à la pièce de référence de sorte que ladite pièce de maintien maintienne par compression lesdites lames transparentes superposées en appui contre les première et deuxième parties planes de la pièce de référence.

Selon le procédé conforme à l'invention, à l'aide de la platine de montage, on indexe dans la direction de l'axe longitudinal du conduit de lumière les lames transparentes en les superposant avant de les placer en appui sur les parties planes horizontale et verticale de la pièce de référence, de sorte que leur(s) facette(s) de réflexion et leur face de sortie de lumière soient positionnées par rapport aux plans horizontal et vertical de référence de ladite pièce de référence.

Une fois montées sur la pièce de référence, les lames transparentes sont alors parfaitement positionnées de manière déterminée dans les trois directions spatiales.

Selon une variante de réalisation du procédé conforme à l'invention, à l'étape C), on positionne sur la superposition de lames transparentes, la pièce de référence de sorte que sa première partie plane horizontale soit placée contre la surface superieure de la lame transparente supérieure la plus courte et contre la surface supérieure de la partie débordante de la lame transparente positionnée juste en dessous de cette dernière.

Selon une autre variante de réalisation du procédé conforme à l'invention, à l'étape c), la facette d'extrémité de la lame supérieure courte vient en butée contre la pige de positionnement prévue sur le bord d'extrémité en biais de la partie haute de la première partie plane horizontale de la pièce de référence afin d'assurer le positionnement de la lame transparente supérieure suivant l'axe longitudinal dudit conduit de lumière.

Ainsi, selon cette variante de réalisation du procédé, il n'est pas nécessaire de prévoir une pige de positionnement sur la platine de montage pour l'indexation selon l'axe longitudinal du conduit de lumière de la lame supérieure courte du conduit de lumière, puisque cette indexation est donnée par la pige prévue sur la pièce de référence.

Selon le procédé conforme à l'invention, le maintien des lames transparentes superposées est réalisé par compression selon deux directions horizontale et verticale, grâce à l'assemblage de la pièce de maintien et de la pièce de référence. L'immobilisation suivant l'axe longitudinal du conduit de lumière est obtenue par l'intermédiaire des forces de frottement qui s'exercent entre les faces superposées successives desdites lames comprimées, ces forces de frottement étant suffisantes pour assurer l'immobilisation desdites lames.

La description qui va suivre, en regard des dessins annexés, donnés à titre d'exemples non limitatifs, fera bien comprendre en quoi consiste l'invention, et comment elle peut être réalisée.

Sur les dessins annexés :
la figure 1 est une vue schématique en perspective d'un mode de réalisation du module d'éclairage selon l'invention,
la figure 2 est une vue avant en perspective de la pièce de référence du module d'éclairage selon l'invention,
la figure 3 est une vue arrière en perspective de la pièce de référence de la figure 2,
la figure 4 est une vue avant en perspective de la pièce de maintien du module d'éclairage selon l'invention, et
la figure 5 est une vue de dessus en perspective de la platine de montage sur laquelle sont positionnées la pièce de maintien et les lames transparentes superposées, conformément au procédé de réalisation du module d'éclairage selon l'invention.

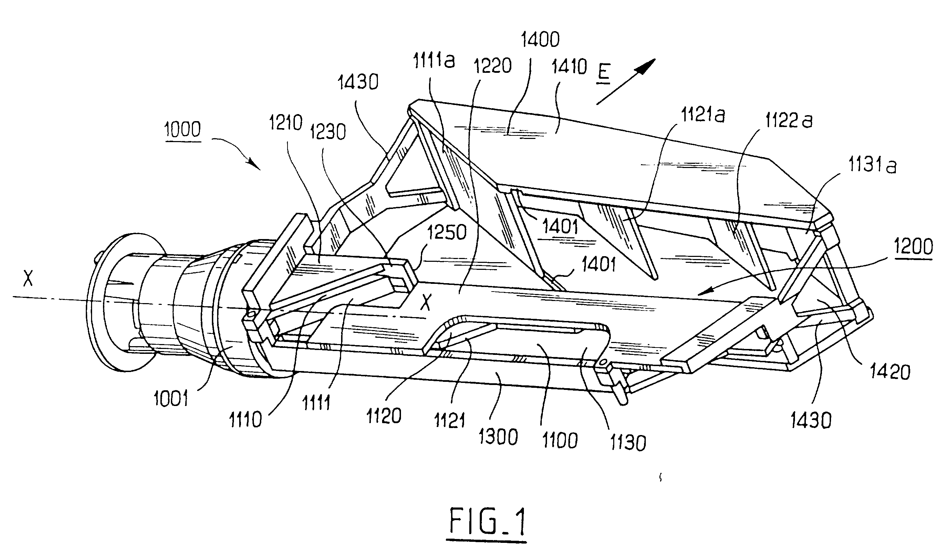

Sur la figure 1 on a représenté un module d'éclairage 1000 pour véhicule automobile, qui comprend une source lumineuse réelle et des moyens 1001 pour concentrer le rayonnement lumineux issu de cette source sur l'extrémité d'un conduit de lumière 1100.

Les moyens de concentration du rayonnement lumineux émis de la source lumineuse réelle sont constitués essentiellement par un réflecteur ou miroir elliptique 1001, la source lumineuse étant constituée par le filament d'une lampe d'automobile, disposée de préférence dans l'axe du réflecteur elliptique 1001, à un de ces foyers.

Le flux lumineux issu de la source lumineuse réelle est réfléchie par le réflecteur elliptique selon un ensemble de rayons qui convergent vers la zone focale du deuxième foyer du réflecteur elliptique.

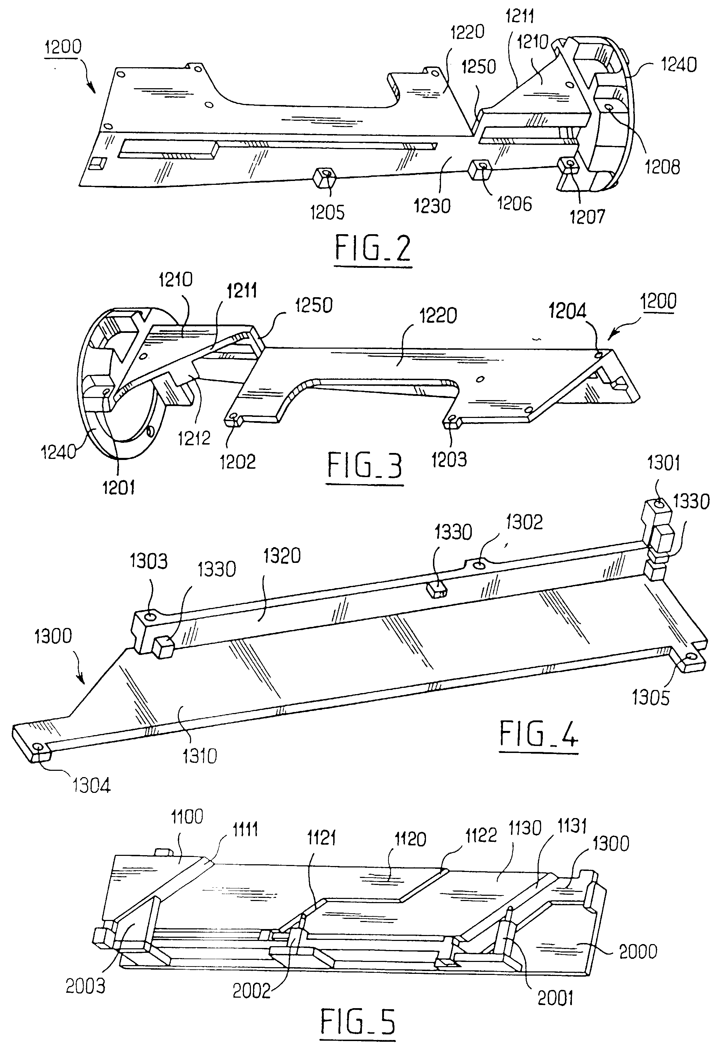

Le conduit de lumière 1100 du module d'éclairage 1000 est pourvu d'une pluralité de facettes de réflexion obliques 1111, 1121, 1122 et 1131 (voir plus particulièrement figure 5) qui coopèrent avec une pluralité d'éléments dioptriques 1111a, 1121a, 1122a, 1131a, ici des lentilles de Fresnel, homologues, d'axes parallèles à la direction d'éclairement E.

Comme on peut le voir plus particulièrement sur la figure 5 le conduit de lumière 1100 est constitué par une pluralité de lames transparentes 1110, 1120, 1130, ici de différentes longueurs, juxtaposées selon au moins une direction, ici superposées. Chaque lame transparente s'étend selon l'axe longitudinal X du conduit de lumière 1100 et sensiblement transversalement à l'axe d'éclairement E.

Dans cet exemple de réalisation, l'axe longitudinal du conduit de lumière s'étend horizontalement. Bien entendu, on peut prévoir que cet axe longitudinal soit légèrement incliné dans le plan vertical.

Selon le mode de réalisation représenté, le conduit de lumière 1100 comporte trois lames transparentes 1110, 1120, 1130, superposées selon la direction verticale et transversale à l'axe longitudinal du conduit de lumière et à la direction d'éclairement E.

Chaque lame transparente est ici réalisée en verre.

Chaque lame transparente 1110, 1120, 1130, comporte à son extrémité la plus éloignée de la source lumineuse réelle, une facette de réflexion oblique 1111, 1122, 1131. La lame transparente intermédiaire comporte également une autre facette de réflexion 1121, délimitée par un décrochement prévu dans la partie arrière de celle-ci.

Ces facettes de réflexion obliques 1111, 1121, 1222, 1131, sont inclinées par rapport à la direction d'éclairement E, leur inclinaison étant comprise entre 35 et 55°, en fonction du positionnement de l'axe longitudinal du conduit de lumière par rapport à la direction d'éclairement.

Chaque lame transparente comporte à son extrémité opposée aux facettes, une face d'entrée de la lumière s'étendant transversalement à l'axe longitudinal du conduit de lumière. L'ensemble des faces d'entrée de la lumière des lames transparentes constitue la face d'entrée du conduit de lumière. Chaque lame transparente comporte en outre une face de sortie de lumière qui est ici une face avant s'étendant sur un côté longitudinal de la lame transparente, verticalement et sensiblement perpendiculairement à la direction d'éclairement E.

Le module d'éclairage 1000 comporte par ailleurs une pièce de référence 1200 pour le montage dudit conduit de lumière 1100.

Comme le montrent plus particulièrement les figures 2 et 3, cette pièce de référence 1200 comprend une première partie généralement plane horizontale 1210, 1220, qui s'étend suivant l'axe longitudinal X du conduit de lumière 1100 et qui définit un plan de référence horizontal, La pièce de référence 1200 comporte également une deuxième partie généralement plane verticale 1230, qui s'étend perpendiculairement à ladite première partie plane 1210, 1220 et qui définit un plan de référence vertical.

Les lames transparentes 1110, 1120, 1130, juxtaposées du conduit de lumière sont montées en appui contre les première et deuxième parties planes 1210, 1220, 1230 de ladite pièce de référence 1200, dans une position déterminée selon l'axe longitudinal X du conduit de lumière 1100 de sorte que leurs facettes de réflexion obliques coopèrent avec les lentilles de Fresnel associées 1111a, 1121a, 1122a, 1131a pour que celles-ci projettent dans la direction d'éclairement E des images correspondant aux facettes à un endroit déterminé dans le faisceau d'éclairement.

Il convient de préciser que dans un projecteur à conduit de lumière à lames transparentes, rien n'est prévu pour assurer l'introduction de la lumière à la hauteur voulue sur les faces d'entrée des lames transparentes. Le profil d'éclairement en face d'entrée du conduit de lumière n'est pas uniforme mais présente une forte concentration sur une zone approximativement circulaire de quelques millimètres de diamètre qui doit être centrée à l'interface des lames 1110 et 1120. La dispersion de la lumière sur l'épaisseur des lames associée aux tolérances de fabrication du verre plat pour la formation des lames, ne permet pas a priori de garantir que cette zone à fort niveau d'éclairement soir correctement positionnée par rapport à cette interface ce qui pénalise alors la qualité du faisceau lumineux obtenu.

Selon l'invention, comme cela sera décrit plus en détails ultérieurement, la face supérieure de la lame transparente intermédiaire 1120 du conduit de lumière, est calée sur la face interne de la première partie plane horizontale 1220 de la pièce de référence 1200 et la lame transparente supérieure 1110 repose sur la lame intermédiaire 1120.

Ainsi, l'interface de ces deux lames est parfaitement positionnée de manière déterminée par rapport à la pièce de référence 1220 et le montage indexé du réflecteur sur la pièce de référence permet alors de s'affranchir de l'inconvénient précité.

Comme on peut le voir sur les figures 2 et 3, la pièce de référence 1200 est une pièce monobloc. Sa première partie plane généralement horizontale est une partie supérieure comprenant une partie haute 1210 et une partie basse 1220 horizontales, parallèles, et raccordées par un décrochement 1250.

La surface supérieure du conduit de lumière 1200 s'appuie contre la face interne de cette première partie généralement plane horizontale de la pièce de référence. Plus particulièrement, la face supérieure de la lame transparente la plus courte 1110 s'appuie contre la face interne de la partie haute 1210 de la première partie plane horizontale de la pièce de référence, et la surface supérieure de la partie débordante de la lame transparente intermédiaire 1120 située juste en dessous de la lame transparente la plus courte, s'appuie contre la face interne de la partie plane basse 1220 de la première partie horizontale de la pièce de référence 1200. La partie haute de la première partie plane horizontale de la pièce de référence comporte un bord 1211 qui s'étend en biais (par rapport à l'axe longitudinal X) à partir du décrochement 1250 jusqu'à son extrémité située côté réflecteur. Ce bord en biais 1211 porte une pige 1212 qui s'étend en saillie en direction du conduit de lumière. Cette pige 1212 permet le positionnement selon l'axe longitudinal du conduit de lumière, de lame transparente directement en appui contre la partie plane haute de ladite pièce de référence 1200, ici la lame transparente la plus courte 1110.

La deuxième partie plane verticale 1230 de la pièce de référence 1200 est une partie avant ajourée selon un profil particulier fonction de la longueur et du positionnement des facettes de réflexion obliques des lames transparentes, contre laquelle s'appuient les faces avant de sortie de la lumière des lames transparentes du conduit de lumière.

La pièce de référence 1200 comporte un cadre 1240, ici de forme générale circulaire, pour le montage du réflecteur elliptique 1101 portant la source lumineuse réelle. La longueur de la lame supérieure la plus courte 1110 du conduit de lumière est telle que le deuxième foyer du réflecteur elliptique monté dans le cadre circulaire 1240, est situé à l'extrémité de ladite lame transparente supérieure portant la facette de réflexion oblique 1111, ceci afin d'obtenir sur cette facette de réflexion une concentration de lumière qui donnera au faisceau d'éclairement sa portée.

Comme le montrent les figures 2 et 3, à l'arrière de la pièce de référence 1200 et à son extrémité la plus éloignée du réflecteur, il est prévu des perçages 1201, 1202, 1203, 1204 pour la fixation sur ladite pièce de référence 1200 d'une pièce de maintien 1300.

En effet, le module d'éclairage 1000 comporte une pièce de maintien 1300 fixée sur la pièce de référence 1200, en appui contre les faces arrière et inférieure du conduit de lumière 1100 pour maintenir par compression lesdites lames transparentes 1110, 1120, 1130 en appui contre les première et deuxième parties planes 1210, 1220, 1230 de ladite pièce de référence 1200.

Comme le montre en particulier la figure 4, cette pièce de maintien par compression 1300, comporte une base 1310 s'étendant selon l'axe longitudinal X du conduit de lumière, dans un plan horizontal parallèle au plan de référence horizontal défini par la première partie plane horizontale de la pièce de référence. Un montant vertical 1320 s'étend le long du bord longitudinal arrière de la base horizonnale 1310, et est destiné à venir en appui contre la face arrière du conduit de lumière. Sur la face interne de ce montant vertical 1320, tournée en direction de la face arrière du conduit de lumière, il est prévu des éléments souples compressibles 1330. Lorsque la pièce de maintien 1300 est fixée à la pièce de référence 1200, lesdits éléments souples compressibles 1300 positionnés entre la face arrière du conduit de lumière et ladite pièce de maintien 130C contribuent au maintien par compression des faces avant de sortie des lames transparentes contre la face interne de la deuxième partie plane verticale de la pièce de référence. Cette pièce de maintien 1300 comprend des perçages 1301, 1302, 1303 sur le montant vertical, et des perçages 1304, 1305 sur le bord avant de la base 1310, qui viennent en concordance avec les perçages 1201, 1202, 1203, 1204 de la pièce de référence, pour la fixation par l'intermédiaire d'un système à vis de la pièce de maintien à la pièce de référence.

Il peut être prévu, dans le module d'éclairage 1000, un élément élastique de pression ici non représenté , tel qu'un ressort à lame, entre le conduit de lumière et la première partie plane de la pièce de référence. Cet élément élastique de pression peut être placé entre la face interne de la partie haute de la première partie plane de la pièce de référence, et la surface supérieure de la lame transparente la plus courte 1110. Il participe au maintien par compression des lames transparentes contre la première partie plane horizontale de la pièce de référence.

Par ailleurs, le module d'éclairage 1000 comporte une pièce avant de montage 1400 qui comporte deux plaques horizontales 1410, 1420 disposées parallèlement en regard l'une de l'autre et solidarisées entre elles par des montants verticaux. Des pattes de montage 1430 s'étendent à partir des montants verticaux de la pièce de montage avant 1400 et sont fixées sur la pièce de référence 1200, à chacune de ses extrémités. Les faces internes en regard des plaques de base 1410, 1420 de la pièce avant de montage 1400 comporte des rainures formant glissières pour le montage des lentilles de Fresnel 1111a, 1121a, 1122a, 1131a. Les rainures prévues pour le montage des lentilles de Fresnel présentent une certaine orientation par rapport à la direction d'éclairement E, et sont positionnées par rapport à la deuxième partie plane verticale de la pièce de référence, de façon que les lentilles de Fresnel montées dans des rainures, la partie avant de montage étant fixée à la pièce de référence, coopèrent optiquement avec les facettes de réflexion obliques des lames transparentes montées en appui contre la pièce de référence, pour projeter dans la direction d'éclairement une image correspondant auxdites facettes.

Pour la réalisation d'un faisceau de coupure, il peut être prévu dans le module d'éclairage 1000, des caches disposés sur le trajet de certains faisceaux élémentaires d'au moins certaines facettes de réflexion, entre la face avant des lames transparentes considérées et les éléments dioptriques associés, lesdits caches étant solidaires de la pièce avant de montage fixée sur la pièce de référence dans une position déterminée par rapport à celle-ci.

Lesdits caches ici non représentés et la pièce avant de montage peuvent former une seule pièce. Il peut être également prévu selon un autre mode de réalisation que ces caches soient rapportés sur ladite pièce avant de montage et fixés à celle-ci par des moyens de fixation.

Il est à noter, que la pièce de référence 1200, la pièce de maintien 1300 et la pièce de montage 1400 peuvent être avantageusement réalisées par moulage en aluminium. Les lentilles de Fresnel 1111a, 1121a, 1122a, 1131a) peuvent être réalisées en Poly-N-méthylméthacrylimide.

La figure 5 montre le principe de montage du module d'éclairage 1000 représente sur la figure 1 selon le procédé conforme à l'invention.

Selon ce procédé, on positionne ladite pièce de maintien 1300 sur une platine de montage 2000 portant sur un montant latéral des piges 2001, 2002, 2003 pour le positionnement indexé des lames transparentes 1130, 1120, 1110 selon l'axe longitudinal X du conduit de lumière. Dans ce but, lesdites piges sont placées à des endroits déterminés suivant l'axe longitudinal de ladite platine 2000.

On superpose sur la pièce de maintien 1300 ainsi positionnée, les lames transparentes 1110, 1120, 1130 du conduit de lumière, suivant des longueurs décroissantes, chaque lame transparente 1130, 1120, 1110 étant positionnées de sorte qu'une de ses facettes de réflexion oblique 1131, 1121, 1111 viennent en butée contre la pige de positionnement 2001, 2002, 2003 correspondante de la platine de montage 1200.

En ce qui concerne la lame transparente intermédiaire 1120, c'est la première facette de réflexion oblique 1121 prévue sur sa face arrière qui vient en butée contre la pige correspondante 2002 de la platine de montage 2000.

Puis, on met en place sur la superposition de lames transparentes 1130, 1120, 1110, la pièce de référence (non représentée sur la figure 5) de sorte que d'une part sa première partie plane horizontale couvre la surface supérieure de la lame supérieure la plus courte 1110, ainsi que la surface supérieure de la partie débordante de la lame transparente intermédiaire 1120 positionnée juste en dessous de cette dernière, et d'autre part sa deuxième partie plane verticale vienne contre les faces avant de sortie de la lumière desdites lames transparentes.

On solidarise la pièce de maintien à la pièce de référence à l'aide d'un système à vis de sorte que ladite pièce de maintien maintienne par compression lesdites lames transparentes superposées en appui contre les première et deuxième parties planes de la pièce de référence, puis on retire la platine de montage.

Selon une variante du procédé, on peut envisager que la platine de montage 2000 ne comporte pas de pige pour le positionnement de la lame supérieure la plus courte du conduit de lumière. Dans ce cas, cette lame transparente supérieure est simplement positionnée sur la lame intermédiaire et lors de la mise en place de la pièce de référence, la facette d'extrémité de cette lame supérieure courte vient en butée contre la pige de positionnement prévue sur le bord d'extrémité en biais de la partie haute de la première partie plane horizontale de la pièce de référence arin d'assurer l'indexation de ladite lame courte supérieure selon l'axe longitudinal dudit conduit de lumière. Cette pige permet en outre d'éviter un éventuel pivotement de cette lame courte.

Ainsi selon ce procédé, le positionnement indexé des lames transparentes du conduit de lumière suivant l'axe longitudinal dudit conduit de lumière est réalisée lors de son montage, grâce aux piges en position déterminée sur la platine de montage. Lorsque la pièce de maintien par compression est fixée à la pièce de référence, les lames transparentes du conduit de lumière sont maintenues par compression contre les deux plans de référence de la pièce de référence. Aucun moyen supplémentaire n'est prévu pour bloquer un déplacement éventuel des lames transparentes selon la direction de l'axe longitudinal X du conduit de lumière. Le maintien par compression des lames transparentes contre les parties planes de la pièce de référence suffit pour générer des forces de frottement entre les lames transparentes bloquant lesdites lames transparentes suivant l'axe longitudinal X.

Le système de montage du conduit de lumière du module d'éclairage 1000 selon l'invention, permet de bien positionner les faces de sortie de lumière des lames transparentes, ainsi que les facettes de réflexion obliques prévues à l'extrémité et éventuellement sur la face arrière desdites lames transparentes, par rapport à deux plans de référence de façon à ce que lesdites facettes coopèrent optiquement avec les lentilles pour que les images desdites facettes projetées par les lentilles dans la direction d'éclairement soient positionnées de façon déterminée pour la formation du faisceau d'éclairement normalisé. Ce positionnement par rapport à deux plans de référence permet de s'affranchir des écarts dus à la tolérance de fabrication des lames individuelles.

En outre, avantageusement, le fait que les lentilles de Fresnel et les caches soient solidaires d'une même pièce de montage positionnée de manière déterminée par rapport a la plaque de référence, permet d'assurer un bon positionnement relatif desdites lentilles et desdits caches et ce quel que soient les phénomènes de dispersion et de dilatation qui peuvent intervenir lors du fonctionnement du module d'éclairage. Les lentilles et les caches sont également bien positionnés par rapport aux faces de sortie des lames transparentes, et auxdites facettes de réflexion obliques. Dans tous les cas, la pièce avant de montage permet de conserver le positionnement relatif des lentilles et des caches, ce qui permet d'obtenir une coupure nette du faisceau d'éclairage.

La présente invention n'est nullement limitée aux modes de réalisation décrits et représentés, mais l'homme du métier saura y apporter toute variante conforme à son esprit.

On peut envisager par exemple selon l'invention, un conduit de lumière comprenant un nombre supérieur à trois de lames transparentes. Dans ce cas la platine de montage comporte un nombre correspondant de piges de positionnement. En outre, le nombre de facettes de réflexion obliques peut être différent par lames.

## Revendications

1. Module d'éclairage (1000) pour véhicule automobile, comprenant une source lumineuse réelle, des moyens (1001) pour concentrer le rayonnement lumineux issu de cette source sur l'extrémité d'un conduit de lumière (1100) muni d'une pluralité de facettes de réflexion obliques (1111, 1121) coopérant avec une pluralité d'éléments dioptriques (1111a, 1121a, 1122a, 1131a) homologues d'axe parallèle à la direction d'éclairement (E), caractérisé en ce que le conduit de lumière (1100) est constitué par une pluralité de lames transparentes juxtaposées (1110, 1120, 1130), s'étendant selon l'axe longitudinal (X) dudit conduit de lumière et pourvues chacune, au moins à leur extrémité la plus éloignée de la source lumineuse réelle, d'une facette de réflexion oblique (1111), et en ce qu'il comporte une pièce de référence (1200) pour le montage dudit conduit de lumière (1100), qui comprend une première partie généralement plane horizontale (1210, 1220), définissant un plan de référence horizontal, et une deuxième partie généralement plane verticale (1230), s'étendant suivant l'axe longitudinal (X) du conduit de lumière (1100) et définissant un plan de référence vertical, les lames transparentes juxtaposées dudit conduit de lumière étant montées en appui contre les première et deuxième parties planes (1210, 1220, 1230) de ladite pièce de référence (1200), dans une position déterminée selon l'axe longitudinal (X) dudit conduit de lumière (1100), de sorte que leur(s) facette(s) de réflexion (1111, 1121) coopèrent optiquement avec lesdits éléments dioptriques (1111a, 1121a) pour que les images des facettes projetées par ceux-ci dans la direction d'éclairement soient positionnées de manière déterminée.

2. Module d'éclairage (1000) selon la revendication 1, caractérisé en ce que la première partie plane horizontale (1210, 1220) de la pièce de référence (1200) est une partie supérieure contre laquelle s'appuie au moins une partie de la surface supérieure du conduit de lumière (1200) et la deuxième partie plane verticale (1230) de la pièce de référence est une partie avant ajourée contre laquelle s'appuient les faces avant de sortie de la lumière des lames transparentes (1110, 1120, 1130) du conduit de lumière (1100).

3. Module d'éclairage (1000) selon l'une des revendications 1 ou 2, caractérisé en ce qu'il est prévu une pièce de maintien (1300) fixée sur la pièce de référence (1200), en appui contre les faces arrière et inférieure dudit conduit de lumière (1100) pour maintenir par compression lesdites lames transparentes (1110, 1120, 1130) en appui contre les première et deuxième parties planes (1210, 1220, 1230) de ladite pièce de référence (1200).

4. Module d'éclairage (1000) selon la revendication 3, caractérisé en ce qu'il est prévu des éléments souples compressibles ( 1330) entre la face arrière du conduit de lumière et ladite pièce de maintien (1300).

5. Module d'éclairage (1000) selon l'une des revendications 1 à 4, caractérisé en ce qu'il est prévu un élément élastique de pression entre le conduit de lumière et la première partie plane de la pièce de référence.

6. Module d'éclairage (1000) selon l'une des revendications 1 à 5, caractérisé en ce que ladite pièce de référence (1200) comporte à une extrémité un cadre (1240) pour le montage d'un réflecteur elliptique (1001) portant la source lumineuse réelle, de sorte que le deuxième foyer dudit réflecteur elliptique soit situé à l'extrémité de la lame supérieure la plus courte (1110) du conduit de lumière (1100), directement en appui contre la première partie plane de la pièce de référence.

7. Module d'éclairage (1000) selon l'une des revendications 1 à 6, caractérisé en ce que la première partie plane horizontale de la pièce de référence (1200), comporte une partie plane haute (1210) et une partie plane basse (1220) horizontales, parallèles et raccordées par un décrochement (1250), la partie plane haute horizontale (1210) présentant un bord d'extremité en biais (1211) qui porte une pige pour le positionnement selon l'axe longitudinal (X) du conduit de lumière, de la lame transparente directement en appui contre la partie plane haute horizontale (1210) de ladite pièce de référence (1200).

8. Module d'éclairage (1000) selon l'une des revendications 1 à 7, caractérisé en ce que, pour la réalisation d'un faisceau de coupure, il est prévu des caches disposés sur le trajet de certains faisceaux élémentaires d'au moins certaines facettes de réflexion, entre la face avant des lames transparentes considérées et les éléments dioptriques associés, lesdits caches étant solidaires d'une pièce avant de montage (1400) fixée sur la pièce de référence (1200) dans une position déterminée par rapport à celle-ci, cette pièce avant de montage (1400) comprenant des aménagements (1401) pour le montage dans cette dernière des éléments dioptriques (1111a, 1121a, 1122a, 1131a).

9. Module d'éclairage (1000) selon la revendication 8, caractérisé en ce que lesdits caches et la pièce avant de montage forment une seule pièce.

10. Module d'éclairage (1000) selon la revendication 8, caractérisé en ce que les caches sont rapportés sur ladite pièce avant de montage et fixés sur celle-ci par des moyens de fixation.

11. Module d'éclairage (1000) selon l'une des revendications 1 à 10, caractérisé en ce que lesdites lames transparentes (1110, 1120, 1130) sont réalisées en verre.

12. Module d'éclairage (1000) selon l'une des revendication 1 à 11, caractérisé en ce que la pièce de référence (1200) est réalisée par moulage en aluminium.

13. Module d'éclairage (1000) selon l'une des revendication 3 à 12, caractérisé en ce que ladite pièce de maintien (1300) est réalisée par moulage en aluminium.

14. Module d'éclairage selon l'une des revendications 8 à 13, caractérisé en ce que ladite pièce avant de montage (1400) est réalisée par moulage en aluminium.

15. Module d'éclairage (1000) selon l'une des revendications 1 à 14, caractérisé en ce que les éléments dioptriques sont des lentilles de Fresnel (1111a, 1121a, 1122a, 1131a) réalisées en Poly-N-méthylméthacrylimide.

16. Projecteur caractérisé en ce qu'il comprend un module d'éclairage selon l'une des revendications 1 à 15.

17. Projecteur selon la revendication 16, caractérisé en ce que le module d'éclairage est fixé à un réflecteur de faisceau de route, ledit module d'éclairage assurant la fonction code.

18. Procédé de réalisation d'un module d'éclairage (1000) selon l'une des revendications 1 à 15, caractérisé en ce que :
a) on positionne ladite pièce de maintien (1300) sur une platine de montage (2000) portant des piges (2001, 2002, 2003) placées à des endroits déterminés suivant l'axe longitudinal (X) de ladite platine (2000), pour le positionnement d'au moins certaines lames transparentes (1130, 1120, 1110) selon l'axe longitudinal (X) du conduit de lumière,
b) on place sur ladite pièce de maintien (1300), les lames transparentes (1130, 1120, 1110) dudit conduit de lumière, les unes sur les autres suivant des longueurs décroissantes, au moins certaines lames transparentes (1130, 1120, 1110) étant positionnées de sorte qu'une de leurs facettes de réflexion obliques (1131, 1121, 1111) vienne en butée contre la pige de positionnement (2001, 2002, 2003) correspondante de ladite platine (2000),
c) on positionne sur la superposition de lames transparentes (1130, 1120, 1110) la pièce de référence de sorte que sa première partie plane horizontale soit placée sur la surface supérieure du conduit de lumière, et sa deuxième partie plane verticale soit placée contre les faces avant de sortie de la lumière desdites lames transparentes,
d) on solidarise la pièce de maintien à la pièce de référence de sorte que ladite pièce de maintien maintienne par compression lesdites lames transparentes superposées en appui contre les première et deuxième parties planes de la pièce de référence.

19. Procédé selon la revendication 18, pour la réalisation d'un module d'éclairage selon l'une des revendications 3 à 15, caractérisé en ce qu'à l'étape c) on positionne sur la superposition de lames transparentes (1130, 1120, 1110), la pièce de référence de sorte que sa première partie plane horizontale soit placée contre la surface supérieure de la lame transparente supérieure la plus courte et contre la surface supérieure de la partie débordante de la lame transparente positionnée juste en dessous de cette dernière.

20. Procédé selon la revendication 19, pour la réalisation d'un module d'éclairage selon l'une des revendications 7 à 15, caractérisé en ce qu'à l'étape c) la facette d'extrémité de la lame transparente supérieure la plus courte vient en butée contre la pige de positionnement prévue sur le bord d'extrémité en biais de ladite partie haute de la première partie plane horizontale de la pièce de référence, afin d'assurer le positionnement de ladite lame transparente supérieure suivant l'axe longitudinal dudit conduit de lumière.
